(19)

Europäisches
Patentamt
European
Patent Office
Office européen
des brevets

(11) **EP 4 718 313 A1**

(12) **EUROPEAN PATENT APPLICATION**

(43) Date of publication:
**01.04.2026 Bulletin 2026/14**

(21) Application number: **25192533.5**

(22) Date of filing: **29.07.2025**

(51) International Patent Classification (IPC):
***G06F 40/30*** (2020.01)

(52) Cooperative Patent Classification (CPC):
**G06F 40/30; G06N 3/08; G06N 7/01; G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.09.2024 US 202418898472**

(71) Applicant: **Intuit Inc.**
**Mountain View, CA 94043 (US)**

(72) Inventors:
- **HU, Kun**
  **Mountain View, 94043 (US)**
- **ZHANG, Jiaxin**
  **Mountain View, 94043 (US)**

(74) Representative: **D Young & Co LLP**
**3 Noble Street**
**London EC2V 7BQ (GB)**

(54) **AUTOMATIC CONFIDENCE BASED DETECTION FOR FINE-TUNING OF LARGE LANGUAGE MODELS**

(57) Systems and methods are disclosed for fine-tuning a large language model (LLM). In particular, a system calculates when to again fine-tune an LLM based on a newly obtained dataset. The system identifies whether the LLM's use of the new dataset causes more than a tolerable difference in the outputs to a defined set of inputs. As such, the system uses the LLM to generate a new set of outputs and corresponding set of confidences for the defined set of inputs based on the new dataset, and the system generates a new distribution of the new set of confidences. The system also stores a previous distribution of a previous set of confidences in a previous set of outputs to the defined set of inputs based on a previous dataset, and the system calculates a difference between the new distribution and the previous distribution. Fine-tuning the LLM is based on the difference.

100

*Figure 1*

EP 4 718 313 A1

**Description**

**CROSS-REFERENCE TO RELATED APPLICATIONS**

This Patent Application claims priority to U.S. Patent Application No. 18/898,472 entitled "AUTOMATIC CONFIDENCE BASED DETECTION FOR FINE-TUNING OF LARGE LANGUAGE MODELS" and filed on September 26, 2024, which is assigned to the assignee hereof. The disclosures of all prior Applications are considered part of and are incorporated by reference in this Patent Application.

**TECHNICAL FIELD**

This disclosure relates generally to the fine-tuning of large language models, including when to fine-tune a large language model based on a newly obtained dataset.

**DESCRIPTION OF RELATED ART**

A generative artificial intelligence (AI) model is a model that is trained to generate content based on input prompts (also referred to as inputs) to the model. One type of generative AI models are large language models (LLMs). An LLM is specific to text, with the LLM receiving a text input as a query and generating a text output as a response based on a dataset of various texts available to the LLM. One popular LLM is ChatGPT® from OpenAI®. The ChatGPT model receives a user input requesting a text output from the model, and the ChatGPT model generates and outputs text based on the user input. While ChatGPT is one example LLM, various other generative AI models exist and are in development, such as InstructGPT, GPT-4, Google® Bard, and so on. In addition, LLMs have been expanded to receive one or more of images, audio, or video in addition to text as an input and output a suitable combination of text or non-text outputs (such as a combination of an audio, text, and image output). An example LLM that is configured to receive queries and output responses that are a combination of text and non-text information is GPT-4o from OpenAI.

Many LLMs are pretrained in a general manner on a large corpus of input data (such as text or a combination of text and non-text, such as audio clips or images). If an LLM is to be used in a specific field (such as a specific science, a specific social science, a specific literary art, and so on), a pretrained LLM may be further fine-tuned using a set of inputs (referred to herein as a dataset) specific to the field in which the LLM is to be used. Fine-tuning may be a form of training the pretrained LLM, with the fine-tuned LLM more capable of answering field specific inputs to the LLM based on the field specific dataset.

**SUMMARY**

Particular aspects are set out in the appended independent claims. Various optional embodiments are set out in the dependent claims.

Systems and methods are disclosed for fine-tuning a large language model (LLM). Because fine-tuning is computing resource intensive and requires significant time to complete, a system calculates whether fine-tuning is required based on a new dataset being obtained. In particular, if a new dataset causes an LLM to generate outputs similar enough to outputs generated by the LLM using a previous dataset so that both outputs would be acceptable, then fine-tuning the LLM is not required for the new dataset. Instead of typical means of comparing outputs from the LLM that require distance calculations for a large number of points in a large number of dimensions (which may be processing resource and time prohibitive in addition to the process of fine-tuning itself), the system calculates a distance between two distributions of confidences for previous outputs and new outputs. Calculation of distances between distributions is a two-dimensional calculation with a limited amount of data, significantly reducing the time and processing resource cost involved to calculate. As such, identifying whether to fine-tune and preventing fine-tuning when not necessary (while performing fine-tuning when necessary), significantly improves performance of a system implementing an LLM that is fine-tuned for a specific purpose.

One innovative aspect of the subject matter described in this disclosure can be implemented as a computer-implemented method for fine-tuning an LLM. The method includes providing a set of inputs to a fine-tuned LLM and generating, by the fine-tuned LLM, a first set of outputs based on the fine-tuned LLM analyzing a first dataset to respond to the set of inputs. The method also includes generating, by the fine-tuned LLM, a first set of confidences for the first set of outputs. Each confidence of the first set of confidences corresponds to an output of the first set of outputs. The method further includes obtaining a second dataset and generating, by the fine-tuned LLM, a second set of outputs based on the fine-tuned LLM analyzing the second dataset to respond to the set of inputs. The method also includes generating, by the fine-tuned LLM, a second set of confidences for the second set of outputs. Each confidence of the second set of confidences corresponds to an output of the second set of outputs. The method further includes calculating a difference between a first distribution of the first set of confidences and a second distribution of the second set of confidences. The method also includes determining whether to fine-tune the fine-tuned LLM using the second dataset, with the determination being based on the difference. The method further includes fine-tuning the fine-tuned LLM using the second dataset based on the determination.

Another innovative aspect of the subject matter described in this disclosure can be implemented in a system for fine-tuning an LLM. An example system includes one or more processors and a memory storing instructions that, when executed by the one or more processors, cause the system to perform operations. The operations include providing a set of inputs to a fine-tuned LLM and generating, by the fine-tuned LLM, a first set of outputs based on the fine-tuned LLM analyzing a first dataset to respond to the set of inputs. The operations also include generating, by the fine-tuned LLM, a first set of confidences for the first set of outputs. Each confidence of the first set of confidences corresponds to an output of the first set of outputs. The operations further include obtaining a second dataset and generating, by the fine-tuned LLM, a second set of outputs based on the fine-tuned LLM analyzing the second dataset to respond to the set of inputs. The operations also include generating, by the fine-tuned LLM, a second set of confidences for the second set of outputs. Each confidence of the second set of confidences corresponds to an output of the second set of outputs. The operations further include calculating a difference between a first distribution of the first set of confidences and a second distribution of the second set of confidences. The operations also include determining whether to fine-tune the fine-tuned LLM using the second dataset, with the determination being based on the difference. The operations further include fine-tuning the fine-tuned LLM using the second dataset based on the determination.

This Summary is provided to introduce in a simplified form a selection of concepts that are further described below in the Detailed Description. This Summary is not intended to identify key features or essential features of the claimed subject matter, nor is it intended to limit the scope of the claimed subject matter. Moreover, the systems, methods, and devices of this disclosure each have several innovative aspects, no single one of which is solely responsible for the desirable attributes disclosed herein.

Details of one or more implementations of the subject matter described in this disclosure are set forth in the accompanying drawings and the description below. Other features, aspects, and advantages will become apparent from the description, the drawings, and the claims. Note that the relative dimensions of the following figures may not be drawn to scale.

## BRIEF DESCRIPTION OF THE DRAWINGS

Figure 1 shows an example system for fine-tuning a large language model (LLM), according to some implementations.

Figure 2 shows a block diagram for using and fine-tuning an LLM, according to some implementations.

Figure 3 shows a block diagram for determining when to fine-tune an LLM, according to some implementations.

Figure 4 shows an illustrative flow chart of an example operation for fine-tuning an LLM, according to some implementations.

Figure 5 shows an illustrative flow chart of an example operation for initially fine-tuning an LLM using a first dataset, according to some implementations.

Figure 6 shows an illustrative flow chart of an example operation for performing a Kolmogorov-Smirnov (K-S) test to determine when to fine-tune an LLM, according to some implementations.

Figure 7 shows an illustrative flow chart of an example operation for generating an initial set of outputs and an initial set of confidences by a pretrained LLM before fine-tuning using a first dataset, according to some implementations.

Figure 8 shows an illustrative flow chart of an example operation for performing a Kullback-Leibler (KL) Divergence test to determine when to fine-tune an LLM, according to some implementations.

Like numbers reference like elements throughout the drawings and specification.

## DETAILED DESCRIPTION

Implementations of the subject matter described in this disclosure may be used for the fine-tuning of large language models (LLMs), including determining when to fine-tune the LLM based on a newly obtained dataset. Various LLMs are pretrained on a generalized dataset (such as from data scraped from the internet, obtained from a public repository, or collected from one or more data aggregators). Such pretrained LLMs are thus capable of providing responses to queries on general topics based on the generalized dataset being used as context by the pretrained LLM. However, in many instances, it is desired for an LLM to be capable of providing responses to queries in more specific subject areas. For example, a pretrained LLM may be able to answer general academic queries based on a generalized dataset including information typically found on Wikipedia® or other general community forums, but the pretrained LLM may have difficulty answering specific queries on topics from, e.g., international law, pharmacology, astrophysics, current taxation policies, and so on that require a more specific dataset that holds answers to such queries. To be able to answer queries on a specific topic, a pretrained LLM is fine-tuned using a more specific dataset focused on that topic. For example, a scoped dataset to answer questions on international law may include recent articles from law school journals, court decisions that are released into the public domain, and opinion pieces and summaries of such court decisions found in legal circles. Such dataset is used to fine-tune a pretrained LLM and is used by the fine-tuned LLM to answer future queries on such legal matters. In another example, a scoped dataset to answer questions on tax policies and procedures may include recent legislation passed by relevant governing bodies, meeting notes released from meetings to pass such legislation, and opinion pieces and summaries on the legislation. A pretrained LLM is fine-tuned using the scoped dataset, and the fine-tuned LLM is able to answer tax specific questions using the scoped dataset.

As time passes, the specific topic to which the scoped dataset is directed may change such that the information in the scoped dataset becomes less and less relevant for answering current queries. As such, a fine-tuned LLM may become less and less capable of reliably answering queries on the topic. For example, new legal precedents may be released, and court opinions may change over time such that answers to legal issues may change over time. In another example, a governing body may pass new taxation legislation each legislation session such that answers to tax questions may change over time. As such, a fine-tuned LLM may need to be again fine-tuned using an updated dataset in order for the LLM to remain relevant in answering topic specific queries. Then, as further time passes, the LLM may again need to be fine-tuned using a newly updated dataset in order for the LLM to again remain relevant.

In many instances, an LLM may be fine-tuned periodically based on a schedule to ensure that the LLM remains relevant on a specific topic. For example, for taxation, an LLM may be fine-tuned annually to coincide with breaks in the legislative sessions. In this manner, a new dataset may include new legislation passed from the previous session as well as any analysis available on such legislation. For a legal topic, an LLM may be fine-tuned every six months (or another interval) to ensure that a new dataset includes legal decisions and analysis created during the period from the last fine-tuning.

One problem with scheduling fine-tuning is that a new dataset may not be sufficiently different from a previous dataset such that fine-tuning is not required. For example, a legislature may not pass any new laws that impact taxation, or courts may not hear any cases that impact a specific legal topic. As such, fine-tuning may not improve the performance of the LLM and thus may be unnecessary. Since fine-tuning is a processing resource intensive process (requiring a significant number of processing cycles and resources) and fine-tuning is also time intensive, unnecessarily fine-tuning an LLM may be costly to a company or entity whose computing resources are tied up by the process.

A further problem with scheduling fine-tuning is that if fine-tuning is required, an LLM's responses may be irrelevant during the period before the LLM is to be fine-tuned. For example, if an LLM is to be fine-tuned every year for tax procedure and legislation purposes and a seminal court decision on the matter during that period significantly impacts interpretation of procedure and legislation, the LLM may provide unhelpful or, at worst, incorrect responses to queries on the matter until the LLM is again fine-tuned with a new dataset including information regarding the decision. If the decision and analysis occurs three months after the last fine-tuning of the LLM, the LLM may not be capable of properly answering questions for at least nine months when the LLM is to again be fine-tuned.

As such, it may be useful to provide a means of determining when to fine-tune an LLM based on a new dataset and fine-tuning the LLM using the new dataset.

In addition, means to determine when to fine-tune the LLM may have been based on calculating a difference between the old dataset and the new dataset. Such difference may have been calculated by vectorizing the datasets into a large number of token vectors along a high number of dimensions and calculating distances between the various vectors in the high number of dimensions. Such multiple dimension calculations for a large number of vectors/datapoints may be impossible to perform using a practical amount of processing resources over a practical amount of time.

As such, it may be useful for the means to determine when to fine-tune the LLM and fine-tuning itself of the LLM to be cost-efficient.

Further, in addition or alternative to scheduling fine-tuning, determining when to fine-tune an LLM may be based on an individual's or team's decision or identification of when to fine-tune the LLM. However, a problem with relying on a person or persons to decide when an LLM is to be fine-tuned is that such decision is a subjective decision based on the persons. Another problem is that persons may be unable to identify important differences within the data that would require the LLM to be fine-tuned. For example, an LLM fine-tuned for a legal topic may require the persons to be experts on legal matters as well as data science and artificial intelligence. In addition, such experts' decisions are colored by their previous experiences, which may cause an undesired decision.

A further problem is that the amount of new information to be included in a new dataset may be impossible for a practical number of persons to review. For example, a plethora of court decisions are released weekly across federal, state, and local jurisdictions for the United States (much less internationally) that cannot be reviewed within a week by a large group of legal professionals. As such, it may be useful for the efficient means to determine when to fine-tune the LLM to be self-contained and automatic without requiring manual intervention or analysis.

As described herein, a system is configured to determine when to fine-tune an LLM based on confidences generated for outputs from the LLM when using a new dataset. In particular, the system generates a distribution of confidences in outputs for a test set of inputs to the LLM (which is currently fine-tuned based on an old dataset) when using the old dataset, and the system generates a distribution of confidences in outputs for the same test set of inputs to the LLM when using a new dataset. In this manner, the system approximates a difference between the datasets by calculating a difference between the confidence distributions generated using the different datasets to determine whether to fine-tune the LLM using the new dataset. Since a confidence distribution is modeled as a two-dimensional variable, the difference calculation is a two-dimensional problem instead of a highly dimensional problem of typical vector analysis to determine a direct difference between the datasets. As such, the system is able to efficiently identify when to fine-tune the LLM and thus fine-tune the LLM without manual intervention that may taint the results through subjective analysis.

Various implementations of the subject matter disclosed herein provide one or more technical solutions to the training of machine learning models, and in particular, generative artificial intelligence (AI) models. As such, various aspects of the present disclosure provide a unique computing solution to a unique computing problem that did not exist prior to generative AI models. In addition, the required analysis and training of LLMs cannot be performed in the human mind, much less practically in the human mind, even if pen and paper are used.

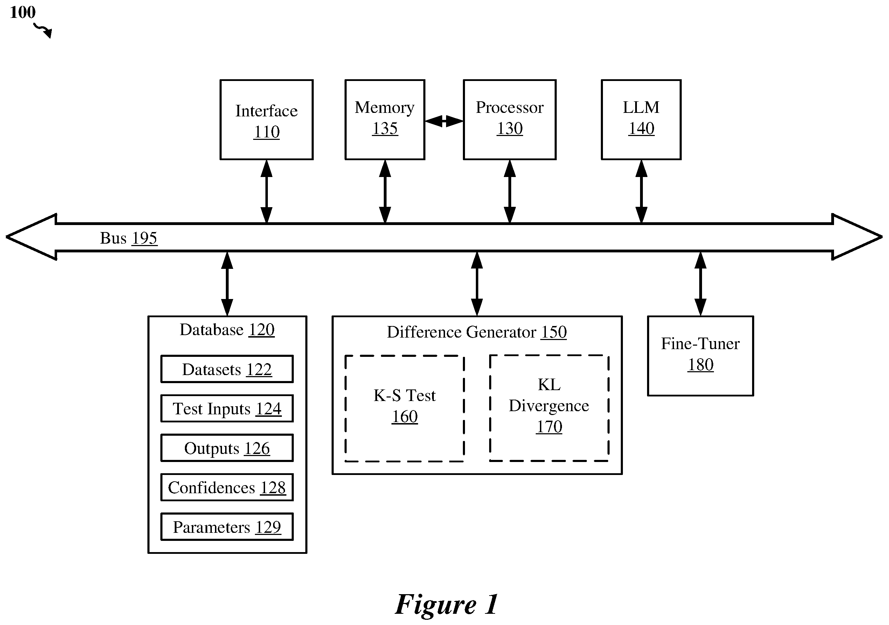

Figure 1 shows an example system 100 for fine-tuning an LLM 140, according to some implementations. The system 100 includes an interface 110, a database 120, a processor 130, a memory 135 coupled to the processor 130, an LLM 140, a difference generator 150, and a fine-tuner 180. In some implementations, the various components of the system 100 may be interconnected by at least a data bus 195, as depicted in the example of Figure 1. In other implementations, the various components of the system 100 may be interconnected using other suitable signal routing resources. The components of the system 100 may be housed in a single computing device or distributed across one or more computing devices. For example, the system 100 may be implemented in a distributed computing environment.

The interface 110 may be one or more input/output (I/O) interfaces to receive one or more of a pretrained LLM from another computing device, one or more hyperparameters of the pretrained LLM, one or more datasets, updates to the datasets, test input queries or training queries for fine-tuning the pretrained LLM or previously fine-tuned LLM by the fine-tuner 180, or threshold or other parameter adjustments for the difference generator 150. The interface 110 may also output one or more of responses by the LLM, confidences generated by the LLM for the responses, metrics calculated by the system in determining when to fine-tune the LLM (such as outputs of the Kolmogorov-Smirnov (K-S) Test 160 or the Kullback-Leibler (KL) Divergence 170), the LLM 140 after fine-tuning, or hyperparameters or adjustments to the hyperparameters made during fine-tuning of the LLM 140. An example interface 110 may include a wired interface or wireless interface to a network to communicate with other devices. The interface may also include input/output (I/O) peripherals for communicating with a local user, such as a display, mouse, keyboard, speakers, microphone, and so on.

The database 120 may store datasets 122 used as context by the LLM 140 and used to fine-tune the LLM 140, test inputs 124 used in determining when to fine-tune the LLM 140, outputs 126 generated by the LLM 140 from inputs to the LLM 140, confidences 128 generated by the LLM 140 in the outputs 126, and parameters 129 of the LLM 140 and the difference generator 150 (such as one or more parameters of the K-S Test 160 or the KL Divergence 170). While not depicted, the database 120 may also store one or more of outputs of the difference generator 150, parameter adjustments to the LLM 140 generated by the fine-tuner 180, computer executable instructions to execute any of the components 140-180, or other computer executable instructions or data for operation of the system 100. In some implementations, the database 120 may include a relational database capable of presenting information (such as a legend of the datasets 122, the confidences 128, or distributions of the confidences 128) as data sets or tables capable of being manipulated using relational operators. The database 120 may use Structured Query Language (SQL) for querying and maintaining the database 120.

The processor 130 may include one or more suitable processors capable of executing scripts or instructions of one or more software programs stored in system 100 (such as within the memory 135). For example, the processor 130 may be capable of executing one or more applications (such as a software platform), the LLM 140, the difference generator 150, and the fine-tuner 180. The processor 130 may include a general-purpose single-chip or multi-chip processor, a digital signal processor (DSP), an application specific integrated circuit (ASIC), a field programmable gate array (FPGA) or other programmable logic device, discrete gate or transistor logic, discrete hardware components, or any combination thereof. In one or more implementations, the processors 130 may include a combination of computing devices (such as a combination of a DSP and a microprocessor, a plurality of microprocessors, one or more microprocessors in conjunction with a DSP core, or any other such configuration in one device or distributed across a plurality of devices).

The memory 135, which may be a persistent memory (such as non-volatile memory or non-transitory memory), may store any number of software programs, executable instructions, machine code, algorithms, and the like that can be executed by the processor 130 to perform one or more corresponding operations or functions. For example, the memory 135 may store one or more applications, the LLM 140, the difference generator 150, and the fine-tuner 180 that may be executed by the processor 130. The memory 135 may also store inputs, outputs, or other information associated with the components 140-180 of the system 100 (such as the test inputs 124 or other inputs to the LLM 140, outputs 126, confidences 128, parameters 129, metrics or other outputs from the difference generator 150, or hyperparameters of the LLM 140 from the fine-tuner 180) or any other data for operation of the system 100. In some implementations, hardwired circuitry may be used in place of, or in combination with, software instructions to implement aspects of the disclosure.

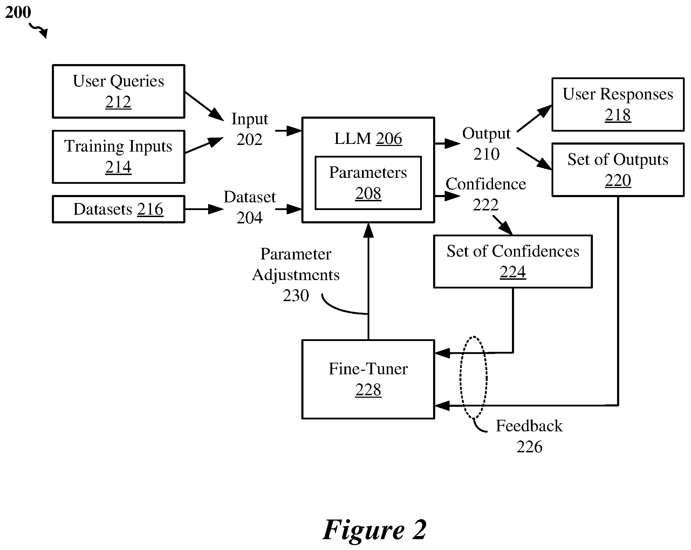

The LLM 140 includes a pretrained or a fine-tuned version of the pretrained LLM. In some implementations, the pretrained LLM includes the Mistral 7B model released by Mistral AI or the LLaMA-2-7b model released by Meta AI. However, other LLMs that are able to be fine-tuned may be used, such as Chat GPT 4o or GPT-4 released by Open AI. General operation and fine-tuning of the LLM 140 is described in more detail below with reference to Figure 2.

While Figure 1 depicts one LLM 140 being included in the system 100, system 100 may include a plurality of LLMs or different versions of the same LLM. For example, one LLM or a first version of an LLM may be fine-tuned using a dataset scoped towards a first topic, and another LLM or a second version of the LLM may be fine-tuned using a different dataset scoped towards a second topic. Different LLMs may also be found to be more effective for different topics. As such, the database 120 may include a repository of pretrained LLMs from which the LLM 140 to be used may be selected. Alternatively, the pretrained LLM 140 to be used may be downloaded from a source device via the interface 110.

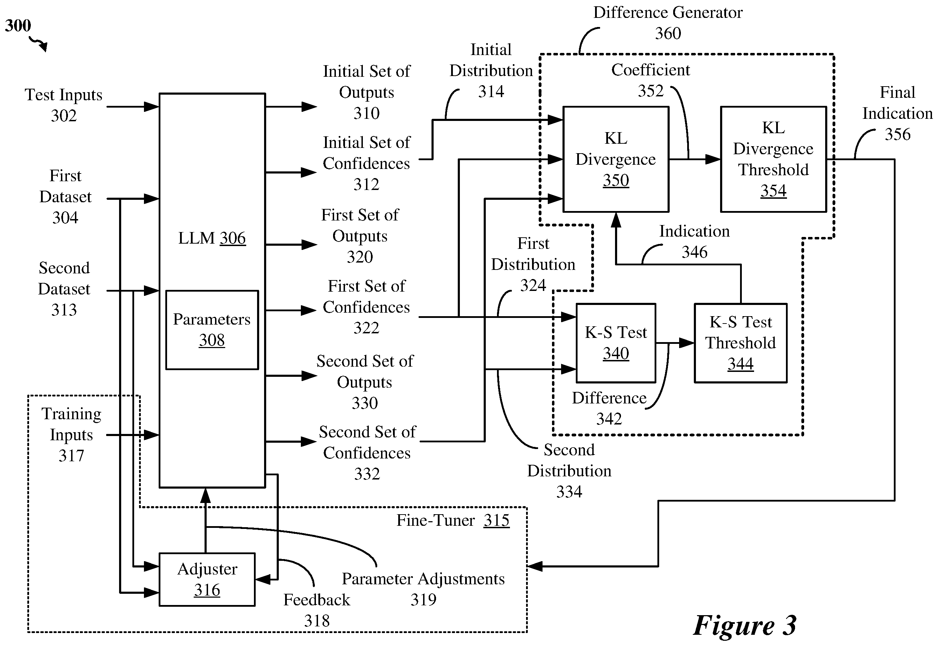

The difference generator 150 calculates a difference between distributions of confidences generated by the LLM 140 for a plurality of outputs using different datasets. In some implementations, the difference generator 150 includes a Kolmogorov-Smirnov (K-S) test 160 to calculate a difference between two confidence distributions and to determine whether the LLM 140 is to be fine-tuned using a new dataset. The difference generator 150 may also include a Kullback-Leibler (KL) Divergence 170 to verify a determination by the K-S Test 160 that fine-tuning of the LLM 140 using a new dataset is to be performed by the fine-tuner. Operation of the difference generator 150 (including operation of the K-S Test 160 and the KL Divergence 170) is described in more detail below with reference to Figure 3.

The fine-tuner 180 fine-tunes the LLM 140 using a specific dataset (such as the newest dataset of the datasets 122). As noted herein, the LLM 140 may be fine-tuned for a specific topic. As such, the dataset used in fine-tuning the LLM 140 is a domain-specific dataset. The domain-specific dataset is also used by the LLM 140 to generate responses to queries input to the LLM 140. In some implementations, the fine-tuner 180 performs supervised fine-tuning (SFT) on the LLM 140. The SFT may include reinforcement learning from human feedback (RLHF) techniques. Alternatively, the SFT may include direct preference optimization (DPO) techniques. In some implementations, fine-tuning the LLM 140 may include parameter efficiency fine-tuning (PEFT), which may implement, e.g., the Low-Rank Adaptation (LoRA) algorithm or the Quantized LoRA (QLoRA) algorithm. Operation of the fine-tuner 180 is described in more detail below with reference to Figure 2 and Figure 3.

As noted herein, different LLMs or different variations of an LLM may be included in the system 100 based on different topics (also referred to herein as domains) to which the LLM is fine-tuned. As such, the datasets 122 may include different domain-specific datasets. The system 100 is configured to obtain new domain-specific datasets (which are referred to herein generally as datasets). In some implementations, obtaining a new dataset includes receiving the entire dataset via the interface 110. For example, the system 100 may be communicably coupled to an aggregation service that aggregates domain-specific data for the new dataset. In a specific example, if the LLM 140 is fine-tuned for specific legal topics, the system 100 may be communicably coupled to a LexisNexis® or WestLaw® service's server, with the service aggregating recent court decisions and legal opinions on the specific legal topics. The system 100 may thus receive a new dataset from such service via the interface 110. The dataset may also be compiled by the system 100 from multiple services, such as an aggregator, a local web crawler to the system 100, manual submissions to the dataset from a community or users, and so on.

In some implementations, a new dataset is an update to an old dataset. For example, as new court decisions for a legal topic specific LLM are released or as new scholar articles are released for a science topic specific LLM, obtaining a new dataset by the system 100 may include the system 100 obtaining the new data (such as the new decisions or scholar articles) and adding the new data to the existing dataset. In this manner, an existing dataset may be periodically updated with new data to generate new datasets. For example, the system 100 may receive new data from a service weekly, nightly, or at another suitable interval, thus obtaining a new dataset at the suitable interval. Alternatively, updating a dataset or otherwise obtaining a new dataset may be on demand (such as a user actively requesting any updates from an aggregator or other service that provides data for the dataset).

The system 100 is to determine when to fine-tune the LLM 140 using a new dataset. In particular, when changes to a dataset are significant enough that a new dataset differs from an old dataset in a substantial manner to make the LLM 140 reduce its confidences in its outputs, the difference generator 150 calculates the difference in those confidences in order to determine whether to fine-tune the LLM 140 using the new dataset. To be able to compare confidences, the system 100 uses a same set of test inputs 124 to the LLM 140 to generate different sets of outputs using the different datasets and the confidences in those different sets of outputs. For example, the LLM 140 receives a test query and generates a first response using the old dataset and a first confidence in the first response, and the LLM 140 receives the same test query and generates a second response using the new dataset and a second confidence in the second response. In this manner, the first confidence and the second confidence corresponds to outputs generated for the same input to the LLM 140. As such, over a set of test inputs 124, the LLM 140 generates a set of first confidences and a set of second confidences, and the difference generator 150 calculates a difference between the distributions of the two sets of confidences and determines whether to fine-tune the LLM 140 based on the difference.

In some implementations, the set of test inputs 124 is previously generated by one or more subject matter experts with reference to which domain the LLM 140 is to be fine-tuned. The test inputs 124 are then uploaded to the system 100 and stored in the database 120 for future use. In some implementations, the test inputs 124 may also be used as part of the training data (such as training inputs to the LLM 140) during fine-tuning of the LLM 140. In some other implementations, different training inputs may be stored and used by the system to fine-tune the LLM 140.

As depicted in Figure 1, the database 120 may also store the outputs 126 from the LLM 140. The outputs 126 include the responses generated by the LLM 140 from the test inputs 124 provided to the LLM 140. The outputs 126 may also include the responses provided to users while the LLM 140 is in use. The database 120 also stores the confidences 128 from the LLM 140. The confidences 128 include each confidence generated by the LLM 140 for each response generated by the LLM 140 from a test input 124 provided to the LLM 140. The confidences 128 may also include the confidences generated by the LLM 140 for the responses generated by the LLM 140 for users while in use. In some implementations, the confidences are a value on a scale indicating a confidence in an accuracy of the output (such as on a scale from 0 to 1 or a scale from 0 percent to 100 percent, with 1 or 100 percent indicating complete confidence in the output).

The database 120 may also store parameters 129, which include the hyperparameters (also referred to in general as parameters) of the LLM 140. For example, the LLaMA-2-7b LLM includes 7 billion parameters stored within approximately 13 gigabytes (GBs) of data of the model, which may be included in the parameters 129 or otherwise stored in the database 120. The parameters 129 may also include parameters of the difference generator 150. For example, for the K-S Test 160, the parameters 129 may include an alpha defined for the K-S test 160 or a threshold based on the alpha. For the KL divergence 170, the parameters 129 may include a threshold for comparing a metric generated by the KL divergence 170.

Referring now to the operation of the LLM, Figure 2 shows a block diagram 200 for using and fine-tuning an LLM 206, according to some implementations. The LLM 206 is an example implementation of the LLM 140 in Figure 1, the fine-tuner 228 is an example implementation of the fine-tuner 180 in Figure 1, the parameters 208 are hyperparameters of the LLM 206 and are included in the parameters 129 in Figure 1, and the dataset 216 are an example implementation of the datasets 122 in Figure 1. In some implementations, the training inputs 214 may be the test inputs 124 in Figure 1 if the test inputs are to be used to fine-tune the LLM.

In general, an LLM (whether it be pretrained or fine-tuned) receives a query and a dataset and generates a response to the query using the dataset. For example, the LLM 206 receives an input 202 for which an output 210 is to be generated, and the LLM 206 receives a domain-specific dataset 204 that is used by the LLM 206 to generate the output 210 for the input 202. The LLM 206 also generates a confidence 222 in the output 210. When the LLM 206 is in use, the input 202 to the LLM 206 is a user query 212, and the output 210 from the LLM 206 is a user response 218 to the user query. As such, a user may provide a user query 212 to the LLM 206 via an interface (such as the interface 110), and the user may receive a user response 218 from the LLM 206 via the interface. The LLM 206 also generates a confidence 222 in the user response 218, which may or may not be provided to the user via the interface.

When the LLM 206 is fine-tuned, the inputs 202 to the LLM 206 are training inputs 214. The training inputs 214 may be a set of previously generated queries that is prepared to cover specific domain areas with fine-tuning in mind. In addition, the dataset 204 is the domain-specific dataset to which the LLM 206 is to be fine-tuned. In fine-tuning the LLM 206, the fine-tuner 228 generates the parameter adjustments 230 to adjust the parameters 208 of the LLM 206. For example, for the LLaMA-2-7b model, the fine-tuner 228 generates adjustments 230 to a subset of the 7 billion parameters. The parameter adjustments 230 made by the fine-tuner 228 are based on feedback 226 from the outputs of the LLM 206. For example, the set of training inputs 214 are used by the LLM 206 to generate a set of outputs 220 and a set of confidences 224 in the set of outputs 220. The fine-tuner 228 obtains the set of confidences 224 as part of the feedback 226, and the fine-tuner 228 may also receive information regarding the set of outputs 220 as part of the feedback 226.

For example, for SFT, the system 100 may store desired outputs to the training inputs 214. The fine-tuner 228 may thus receive the set of outputs 220 and the set of desired outputs, vectorize the outputs, and calculate a distance between the vectors. The fine-tuner 228 may then generate a loss from a loss function that is based on the distance and the confidences 224, and the fine-tuner 228 adjusts the parameters 208 based on the loss. The process repeats in an iterative manner, thus iteratively adjusting the parameters 208, to reduce the loss.

Alternative to the training inputs 214 being previously generated queries, the training inputs 214 may be user generated queries from one or more users. Otherwise, if the training inputs 214 are previously generated queries, the system may not store desired responses to the previously generated queries. In this manner, if there are changes in the domain, persons are not required to review and update predefined responses each time the LLM 206 is to be fine-tuned. To compensate for a lack of predefined responses to compare with the generated outputs 220, the set of outputs 220 may be outputs provided to one or more users, and the one or more users provide user feedback as to the relevance of a provided output. For example, a user may provide a binary feedback as to whether or not the output is relevant to the query used to generate the output. If the SFT includes RLHF or DPO techniques, the fine-tuner 228 uses a reward model based on the user feedback to iteratively adjust the parameters. If SFT also includes PEFT, the fine-tuner 228 limits the parameters 208 that may be adjusted to a specific subset of parameters that are iteratively adjusted in order to fine-tune the LLM 206.

The iterative adjustment of parameters and testing of the LLM through fine-tuning is computing resource intensive and time intensive. Thus, fine-tuning an LLM when not necessary significantly wastes time and resources. Conversely, if a domain-specific dataset changes significantly enough, not fine-tuning the LLM to the new domain-specific dataset significantly reduces the performance of the LLM. As described herein, the system 100 is configured to automatically fine-tune the LLM 140 when needed, with the determination made when to fine-tune being efficient that is not time or resource intensive. The efficient process for entering into fine-tuning by the system 100 are described below with reference to Figure 3 through Figure 8.

Figure 3 shows a block diagram 300 for determining when to fine-tune an LLM 306, according to some implementations. The LLM 306 is an example implementation of the LLM 206 in Figure 2 and the LLM 140 in Figure 1, with the parameters 308 of the LLM 306 being an example implementation of the parameters 208 of the LLM 206 in Figure 2. In addition, the fine-tuner 315 is an example implementation of the fine-tuner 228 in Figure 2 and the fine-tuner 180 in Figure 1, and the difference generator 360 is an example implementation of the difference generator 150 in Figure 1.

As noted above with reference to Figure 2, fine-tuning by the fine-tuner 315 may include an iterative process of generating parameter adjustments 319 (shown as being performed by a parameter adjuster 316) to reduce a loss or increase a reward associated with the outputs of the LLM 306 being more relevant (as indicated in the feedback 318 corresponding to the outputs of the LLM 306 and the confidences generated by the LLM 306 for those outputs). For example, the fine-tuner 315 may perform SFT on the LLM 306, which may include RLHF or DPO, and may include PEFT, such as described herein.

Originally, the LLM 306 may be pretrained and yet to be fine-tuned using a first dataset 304 or using a second dataset 313. Alternatively, the LLM 306 may already be fine-tuned using the first dataset 304. Both the first dataset 304 and the second dataset 313 are domain-specific datasets. In some implementations, the second dataset 313 is an updated dataset of the first dataset 304, with new data having been added to the dataset. In some other implementations, the second dataset 313 may be a completely new dataset as compared to the first dataset 304.

If the first dataset 304 and the second dataset 313 are similar enough, the responses generated from queries to the LLM 206 using the first dataset 304 as compared to using the second dataset 313 should be similar such that fine-tuning of the LLM 306 using the second dataset 313 is not to occur. However, as the second dataset 313 diverges from the first dataset 304 in similarity, the responses may diverge based on whether the first dataset 304 or the second dataset 313 is used by the LLM 306. As such, at some point, the fine-tuner 315 is to fine-tune the LLM 306 using the second dataset 313 to ensure that responses from the LLM 306 remain relative.

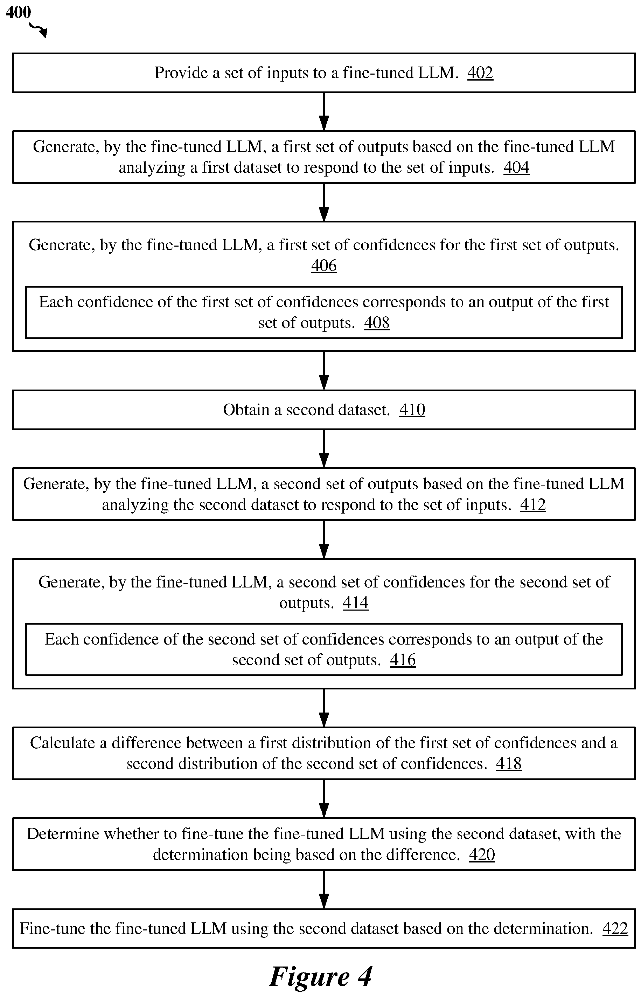

In Figure 3, the difference generator 360 calculates and indicates whether the fine-tuner 315 is to fine-tune the LLM 306. As such, the fine-tuner 315 is activated to fine-tune the LLM 306 using a new dataset based on a final indication 356 output by the difference generator 360 indicating that the LLM 306 is to be fine-tuned. The final indication 356 is a binary indication that triggers activation of the fine-tuner 315. To note, the final indication 356 is based on a difference calculated by the difference generator 360 based on the first dataset 304 and the second dataset 313 as described herein. In practice, the difference generator 360 determines a difference between a first dataset 304, which may be a previous dataset, and a second dataset 313, which may be a new dataset (such as an update to the first dataset 304), based on the confidences corresponding to the outputs of the LLM 306, and the difference generator 360 outputs the final indication 356 (thus determining when to fine-tune the LLM 306) based on such difference. Operation of the difference generator 360 determining when fine-tuning is to be performed to generate the indication and the fine-tuner 315 fine-tuning the LLM 306 using a new dataset (such as the second dataset 313) are described below with reference to Figure 4 through Figure 8.

Figure 4 shows an illustrative flow chart of an example operation 400 for fine-tuning an LLM, according to some implementations. The example operation 400 is described below as being performed by the system 100 in Figure 1 and the arrangement of components in the block diagram 300 in Figure 3 for clarity in describing aspects of the present disclosure. For the example operation 400 to be performed, the LLM 306 is fine-tuned using the first dataset 304, with the first dataset 304 being the current dataset used by the LLM 306 to generate responses to user queries. The system 100 is to determine if the LLM 306 is to be again fine-tuned, but this time using the second dataset 313 (which is a new dataset), or if the previous fine-tuning of the LLM 306 using the first dataset 304 is still sufficient when the LLM 306 uses the second dataset 313 to generate responses.

At 402, the system 100 provides a set of inputs to the fine-tuned LLM 140. In some implementations, the fine-tuned LLM 306 obtains the test inputs 302, which are stored in the database 120 as the set of test inputs 124. As noted above, the test inputs may be predefined queries to be provided to the LLM when determining whether the LLM is to again be fine-tuned to a new dataset.

At 404, the fine-tuned LLM 140 generates a first set of outputs based on the fine-tuned LLM 140 analyzing a first dataset to respond to the set of inputs. For example, for the set of test inputs 302, the fine-tuned LLM 306 generates a first set of outputs 320. To generate the first set of outputs 320, each test input is provided to the LLM 306, and the LLM 306 generates an output in the first set of outputs 320 for the test input. The fine-tuned LLM 140 also generates a first set of confidences for the first set of outputs (406). For example, when each output of the first set of outputs 320 is being generated, the fine-tuned LLM 306 also generates a confidence of the first set of confidences 322 that corresponds to the output generated. As such, each confidence of the first set of confidences 322 corresponds to an output of the first set of outputs 320 (408). To note, generating the outputs and the confidences using the first dataset may be previously performed, with at least the confidences being stored by the system 100 for later use in determining whether the LLM is to again be fine-tuned.

At 410, the system 100 obtains a second dataset. For example, the system 100 may receive from, e.g., a data aggregator or web crawler, a periodic update or an on-demand update of data that is to be added to the existing dataset (i.e., the first dataset 304). As such, the system 100 may generate the second dataset 313 by adding the new data to the first dataset 304. Additionally, or alternatively, the update may include indications that some data is to be removed from the existing dataset. For example, if the first dataset 304 is domain-specific to an area of law in which a previous court decision is later ruled as invalid legal precedent, a legal data aggregator may indicate in an update the court decision and legal articles surrounding the court decision to be removed from the existing dataset. As such, the second dataset 313 may not include some data that is included in the first dataset 304.

At 412, the fine-tuned LLM 140 generates a second set of outputs based on the fine-tuned LLM 140 analyzing the second dataset to respond to the set of inputs. Block 410 is similar to block 404, except that in 410 the fine-tuned LLM 306 uses the second dataset 313 to generate the second set of outputs 330 for the same set of test inputs 302 as provided to the fine-tuned LLM 306 in block 404. The fine-tuned LLM 140 also generates a second set of confidences for the second set of outputs (414). Similar to block 406, when each output of the second set of outputs 330 is being generated, the fine-tuned LLM 306 also generates a confidence of the second set of confidences 332 that corresponds to the output generated. As such, each confidence of the second set of confidences 332 corresponds to an output of the second set of outputs 330 (416). To note, generating the outputs and the confidences using the second dataset may be performed when the second dataset is received. For example, once an instance of the first dataset 304 is updated with newly obtained data to become the second dataset 313, the system 100 may cause the LLM 306 to generate the second set of outputs 330 and the second set of confidences 332 by providing the test inputs 302 to the LLM 306 (with the LLM 306 generating the outputs using the second dataset 313).

Typically, differences between datasets can be measured by the differences between the outputs of the LLM using the different datasets, and the differences can be used to determine when to fine-tune the LLM. However, attempting to calculate a difference between the first set of outputs 320 and the second set of outputs 330 can be an unmanageable multiple dimensional problem. For example, each output can be vectorized into a token vector, and differences can be calculated between each combination of token vectors across the two sets of outputs as distances. However, the vectors may include hundreds of tokens that make calculating a distance to be calculations over hundreds of dimensions. In addition, the number of distances to be calculated exponentially increases as the number of outputs in each set 320 and 330 increases.

Instead of attempting to calculate distances between the sets of outputs 320 and 330 to measure the difference between the first dataset 304 and the second dataset 313, the system 100 is to calculate a difference between the first set of confidences 322 and the second set of confidences 332 to estimate a difference between the first dataset 304 and the second dataset 313. In particular, the system 100 is to calculate a difference between a first distribution 324 of the first set of confidences 322 and a second distribution 334 of the second set of confidences 332. Because a confidence is a single value (such as on a scale from 0 to 1), a distribution of confidences is a two-dimensional variable. Therefore, calculating a difference between two distributions of confidences is a two-dimensional calculation that is manageable as compared to the multi-dimensional problem of calculating differences between outputs.

At 418, the system 100 calculates a difference between a first distribution of the first set of confidences and a second distribution of the second set of confidences. For example, the difference generator 360 calculates a difference between the first distribution 324 and the second distribution 334. In some implementations, the difference generator 360 calculates a maximum difference between the two distributions as the difference. For example, the difference generator 360 may calculate a maximum difference between the cumulative distribution of the first set of confidences and the cumulative distribution of the second set of confidences using a Kolmogorov-Smirnov (K-S) test. The difference may then be compared to a threshold to determine whether the system 100 is to fine-tune the LLM. In some implementations, since confidences are used to calculate a difference instead of the outputs themselves, the system 100 may double-check the validity of the difference calculation using the K-S test by calculating a Kullback-Leibler (KL) divergence between the distributions of confidences.

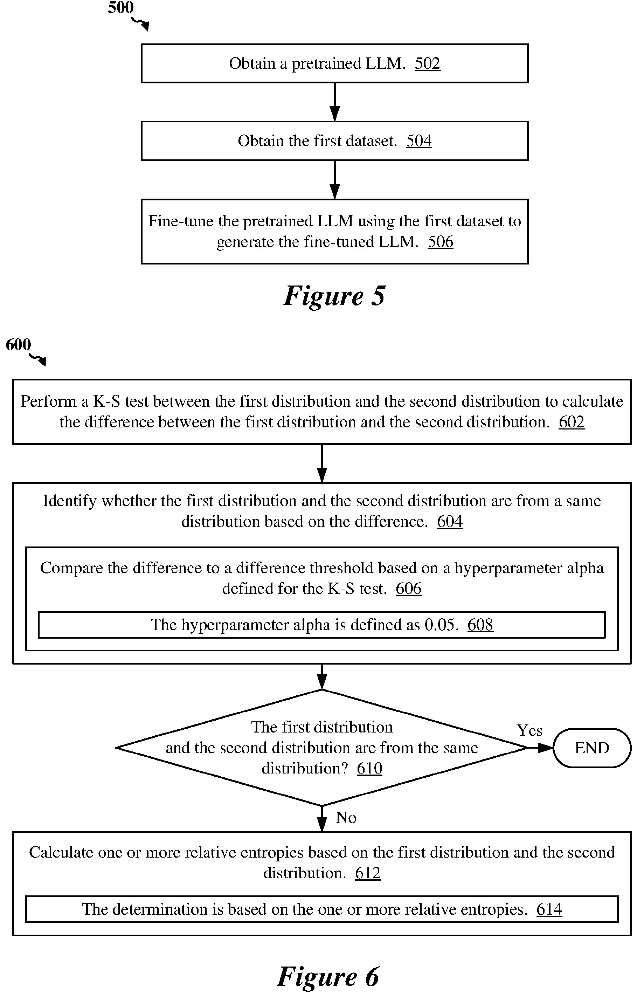

At 420, the system 100 determines whether to fine-tune the fine-tuned LLM 140 using the second dataset, with the determination being based on the difference. For example, the difference generator 360 may generate a final indication 356 that the LLM 306 is to be fine-tuned based on the difference 342 output by the K-S test 340 and, in some implementations, the coefficient 352 output from the KL divergence 350. Calculating the difference using the K-S test and checking its validity by calculating the KL divergence is described in more detail below with reference to Figure 6 through Figure 8.

At 422, the system 100 fine-tunes the fine-tuned LLM 140 using the second dataset based on the determination. For example, the fine-tuner 315 uses the adjuster 316 to generate parameter adjustments 319 in an iterative manner based on feedback 318 of outputs generated for training inputs 317 by the LLM 306. As described above with reference to Figure 2, the fine-tuning may include SFT, which may include RLHF or DPO techniques, and the fine-tuning may include PEFT. In this manner, the system 100 adjusts the parameters 308 of the LLM 306 over multiple iterations based on a reward model to reduce a loss associated with fine-tuning the LLM 306. Also in this manner, the parameters 308 that are allowed to be adjusted may be limited in order to reduce the time and processing resources required for fine-tuning.

As noted above, the example operation 400 is based on the LLM 306 having been fine-tuned using the first dataset 304. Figure 5 shows an illustrative flow chart of an example operation 500 for initially fine-tuning an LLM using a first dataset, according to some implementations. The example operation 500 is described below as being performed by the system 100 in Figure 1 and the arrangement of components in the block diagram 300 in Figure 3 for clarity in describing aspects of the present disclosure. The example operation 500 may be performed before the example operation 400 in order to determine whether to fine-tune an LLM.

At 502, the system 100 obtains a pretrained LLM. In some implementations, the system 100 may store (such as in the database 120) a basket of pretrained LLMs to be fine-tuned and used for a variety of purposes. A user may indicate one of the pretrained LLMs to be used, and the system 100 may retrieve a copy of the pretrained LLM from storage (such as from the database 120). In some other implementations, the LLM may be retrieved from a third-party source via the interface 110. For example, the system 100 may connect via the internet to a server hosting an LLM for download, and the system 100 may download the LLM from the server. In some further implementations, the LLM may remain on a third-party server, and the system 100 may interact with the LLM via an application programming interface (API) or other interface such that the LLM may be fine-tuned and used at the third-party server.

At 504, the system 100 obtains the first dataset. As noted above, the first dataset 304 may be the dataset currently in use when the example operation 400 is to be performed when determining when to fine-tune the LLM 306 using a new dataset (i.e., the second dataset 313). For the example operation 500, the first dataset may be the original dataset to which the pretrained LLM obtained at 502 is fine-tuned. At 506, the system 100 fine-tunes the pretrained LLM using the first dataset to generate the fine-tuned LLM. For example, the system 100 may obtain an original first dataset 304 from a data aggregator, web crawler, or other sources, and the system 100 fine-tunes the LLM 306 using the first dataset. The fine-tuning in block 506 in Figure 5 is similar to the fine-tuning in block 422 in Figure 4, except the LLM 306 is fine-tuned using the first dataset in block 506. Referring back to Figure 4, the operations in blocks 402-408 may be performed after block 506 in Figure 5, and the confidences may be stored for later use in performing the operations in block 418 in Figure 4. In this manner, the first set of confidences 322 needed for calculating a difference in block 418 are ready when the second dataset is obtained.

In performing example operation 500 and then example operation 400, the system 100 uses the LLM 306 that is fine-tuned using the first dataset 304 to generate the first distribution 324 of confidences and the second distribution 334 of confidences using the two different datasets 304 and 313 by the LLM 306, and the system 100 calculates a difference between the distributions to estimate an effectiveness of the LLM 306 if the LLM 306 is not to be again fine-tuned but is to switch from using the first dataset 304 to using the second dataset 313 in answering input queries. Example implementations of calculating such a difference and determining whether to fine-tune the LLM 306 include performing a K-S test, and in some implementations performing a KL Divergence test, which are described below with reference to Figure 6 through Figure 8.

Figure 6 shows an illustrative flow chart of an example operation 600 for performing a Kolmogorov-Smirnov (K-S) test to determine when to fine-tune an LLM, according to some implementations. The example operation 600 is described below as being performed by the system 100 in Figure 1 and the arrangement of components in the block diagram 300 in Figure 3 for clarity in describing aspects of the present disclosure. The example operation 600 is an example implementation of blocks 418 and 420 of example operation 400 in Figure 4.

At 602, with the LLM 306 having generated the first set of confidences 322 and the second set of confidences 332, the system 100 (such as the difference generator 150) performs a K-S test 340 between the first distribution 324 and the second distribution 334 to calculate the difference 342 between the first distribution 324 and the second distribution 334. In particular, the K-S test 340 includes a two-sample K-S test to compare a first cumulative distribution function (CDF) of the first set of confidences 322 and a second CDF of the second set of confidences 332. The K-S test in general is a nonparametric test to determine whether a sample distribution came from a reference distribution. For a two-sample K-S test, the test is to determine whether two samples (such as the two CDFs for the two sets of confidences) came from the same distribution. If the two samples are determined to come from the same distribution, the system 100 may determine that the two underlying datasets used to generate the confidences in the two CDFs are not statistically significant enough to cause the fine-tuning of the LLM 306 using the second dataset.

In performing the K-S test 340, system 100 calculates the difference 342 between the distributions 324 and 334 as a K-S statistic D as depicted in equation (1) below:

$$D = \sup_x |F_1(x) - F_2(x)| \qquad (1)$$

Variable x indicates the confidence in the first distribution 324 of confidences and the second distribution 334 of confidences, with x being an integer from 0 to X and X being the number of confidences in the first distribution 324 (and the second distribution 334). $F_1(x)$ as the first distribution 324 is the CDF of the first set of confidences 322. For example, for x equals 1, $F_1(1)$ equals the first confidence in the first set of confidences 322; for x equals 2, $F_1(2)$ equals the sum of the first confidence and the second confidences in the first set of confidences 322; for x equals 3, $F_1(3)$ equals the sum of the first through third confidences in the first set of confidences 322; and so on until x equals X. $F_2(x)$ as the second distribution 334 is the CDF of the second set of confidences 332. For example, for x equals 1, $F_2(1)$ equals the first confidence in the second set of confidences 332; for x equals 2, $F_2(2)$ equals the sum of the first confidence and the second confidences in the second set of confidences 332; for x equals 3, $F_2(3)$ equals the sum of the first through third confidences in the second set of confidences 332; and so on until x equals X. In this manner, D is calculated by calculating the supremum of the magnitude difference between the first CDF $F_1(x)$ and the second CDF $F_2(x)$ across x from 1 to X. As such, the system 100 calculates at which x the magnitude difference between the two CDFs is greatest, and D is calculated as that magnitude difference.

With the difference 342 calculated, the system 100 identifies whether the first distribution 324 and the second distribution 334 are from a same distribution based on the difference. In some implementations, the system 100 compares the difference 342 to a K-S test threshold 344. For example, the system 100 may compare the difference to a difference threshold based on a hyperparameter alpha ($\alpha$) defined for the K-S test (606).

For the two-sample K-S test 340, the null hypothesis is that both distributions come from the same distribution such that fine-tuning is not to be performed. Alpha is a predefined hyperparameter to calculate a threshold used to compare with the K-S statistic D. If D is greater than the threshold, the null hypothesis is to be rejected. In other words, the system 100 may proceed with fine-tuning the LLM. In Figure 3, the difference 342 (which may be the K-S statistic D) being greater than the K-S test threshold 344 (which may be based on the hyperparameter alpha) causes the indication 346 to indicate that fine-tuning of the LLM 306 is to occur.

In some implementations, the K-S test threshold 344 ($T_{K-S}$) is as depicted in equation (2) below:

$$T_{K-S} = c(\alpha) \sqrt{\frac{n+m}{n*m}} \qquad (2)$$

Variable n is the number of confidences in the first distribution 324, and variable m is the number of confidences in the second distribution 334. If the number of confidences is the same between the first distribution 324 and the second distribution 334, then n equals m. As such, $T_{K-S}$ from equation (2) may simplify to as depicted in equation (3) below:

$$T_{K-S} = c(\alpha) \sqrt{\frac{n+n}{n*n}} = c(\alpha) \sqrt{\frac{2n}{n^2}} = c(\alpha) \sqrt{\frac{2}{n}} \qquad (3)$$

In some implementations, the function $c(\alpha)$ is as depicted in equation (4) below:

$$c(\alpha) = \sqrt{-\ln\left(\frac{\alpha}{2}\right) * \frac{1}{2}} \qquad (4)$$

For the most common values of alpha ($\alpha$): when $\alpha$ = 0.20, $c(\alpha)$ = 1.073; when $\alpha$ = 0.15, $c(\alpha)$ = 1.138; when $\alpha$ = 0.10, $c(\alpha)$ = 1.224; when $\alpha$ = 0.05, $c(\alpha)$ = 1.358; when $\alpha$ = 0.025, $c(\alpha)$ = 1.48; when $\alpha$ = 0.01, $c(\alpha)$ = 1.628; and when $\alpha$ = 0.005, $c(\alpha)$ = 1.731.

In combining equations (3) and (4) above, the $T_{K-S}$ is as depicted in equation (5) below:

$$T_{K-S} = \sqrt{-\ln\left(\frac{\propto}{2}\right) * \frac{1}{2}} * \sqrt{\frac{2}{n}} = \sqrt{-\ln\left(\frac{\propto}{2}\right) * \frac{1}{n}} \qquad (5)$$

In some implementations, the hyperparameter alpha is defined as 0.05 (608). For example, the fine-tuner 180 of the system 100 may be programmed such that alpha is set to 0.05 in calculating the threshold. In some examples, if n is also predefined (such as being based on a predefined number of test inputs 302), then the threshold may also be predefined based on a predefined n and a predefined alpha. In some other implementations, alpha may be defined by a user or otherwise adjustable, or the number of test inputs may be adjustable such that n is not fixed. As such, the fine-tuner 180 of the system 100 may be programmed to calculate the K-S test threshold 344 when needed.

At decision block 610, if the system 100 determines that the first distribution and the second distribution are from the same distribution, the process ends, with the system 100 preventing fine-tuning of the LLM 306 using the second dataset 313. For example, the system 100 may compare the difference 342 (such as D in equation (1)) to the K-S test threshold 344 (such as $T_{K-S}$ in equation (5)). If the difference 342 is less than the threshold 344, the indication 346 may be set to 0 or otherwise indicate that the LLM 306 is not to be fine-tuned using the second dataset 313. If the system 100 (such as the difference generator 360) determines that the difference 342 is greater than the threshold 344, the indication 346 may be set to 1 to indicate that the LLM 306 is to be fine-tuned using the second dataset 313.

In some implementations, the difference generator 360 may not include a KL divergence test, and the final indication 356 may be the same as the indication 346. As such, if the difference 342 is greater than the threshold 344, the fine-tuner 315 may begin fine-tuning the LLM 306 using the second dataset 313. In some other implementations, the difference generator 360 includes a KL divergence test to check whether an indication 346 that the LLM 306 is to be fine-tuned is correct. The KL divergence test is thus to reduce the number of false rejections of the null hypothesis using the K-S test in order to reduce the number of instances in which the LLM 306 is unnecessarily fine-tuned.

The KL divergence test is a test based on a KL divergence, which is also referred to as a relative entropy. A relative entropy $D_{KL}$ from a probability distribution P to a probability distribution Q is calculated as depicted in equation (6) below:

$$D_{KL}(P||Q) = \sum_{x \in X} P(x) * \log\left(\frac{P(x)}{Q(x)}\right) \qquad (6)$$

For the KL divergence test for the system 100, variable x is the $x^{th}$ confidence in a distribution (such as the first distribution 324 or the second distribution 334) and X is the set of confidences having a number of confidences in the distribution also referred to as X herein. For the system 100, each probability distribution P and Q may be one of the first distribution 324 or the second distribution 334 (or in some implementations an initial distribution 314 as described below). To note, the probability distribution P and Q may be a simple distribution function and not a CDF as for the K-S test. The relative entropy $D_{KL}$ measures the relative excess surprise in information theory terms from using the probability distribution Q instead of the probability distribution P. Such surprise is a measure of the difference in terms of a divergence between the two probability distributions.

Referring back to decision block 610 in Figure 6, if the first distribution and the second distribution are determined to not be from the same distribution using the K-S test (such that the indication 346 indicates that the LLM 306 is to be fine-tuned using the second dataset 313), the process continues to 612 in order to perform a KL divergence test. At 612, the system 100 calculates one or more relative entropies based on the first distribution and the second distribution. For example, if the indication 346 indicates that the difference D as calculated in equation (1) above is greater than the $T_{K-S}$ as calculated in equation (5) above, the difference generator 360 generates one or more KL divergences 350 (referred to herein as one or more relative entropies) to check whether the LLM 306 is to actually be fine-tuned. As such, the determination as to whether to fine-tune the fine-tuned LLM 306 using the second dataset 313 is based on the one or more relative entropies (614).

In some implementations, the system 100 may directly compare the first distribution 324 to the second distribution 334 in order to make a final determination and generate the final indication 356. For example, the difference generator 360 may generate a relative entropy $D_{KL}(P2||P1)$ based on equation (6) above, with P2 being the distribution of the second set of confidences 332 and P1 being the distribution of the first set of confidences 322. The difference generator 360 may then compare the relative entropy $D_{KL}(P2||P1)$ to a divergence threshold. If the relative entropy is greater than the divergence threshold, the difference generator 360 may output the final indication 356 to indicate that the LLM 306 is to be fine-tuned using the second dataset 313. The divergence threshold (also referred to as a KL divergence threshold 354) may be predefined when programming the KL divergence test 170 for the difference generator 150. Additionally, or alternatively, the divergence threshold may be set by a user or otherwise adjustable.

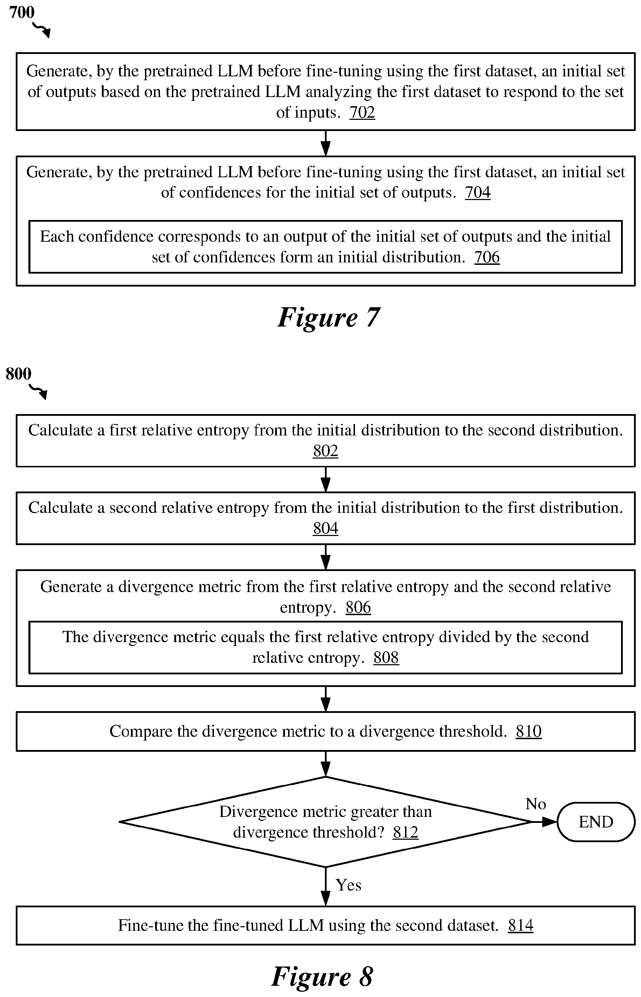

Instead of directly comparing the first distribution 324 and the second distribution 334 during the KL divergence test, the system 100 may compare a relative entropy of a third distribution to the second distribution 334 and a relative entropy of the third distribution to the first distribution 324. In this manner, there is a common distribution from which to measure the relative excess surprise of the first distribution 324 and the second distribution 334. In some implementations, the third distribution is the initial distribution 314 of the initial set of confidences 312 corresponding to the initial set of outputs 310 generated by the pretrained LLM 306 for the test inputs 302 before being fine-tuned using the first dataset 304. If the KL divergence test is to use the initial distribution 314 of the initial set of confidences 312, the pretrained LLM 306 before fine-tuning is to generate the initial set of outputs 310 and the initial set of confidences 312, such as depicted in Figure 7.

Figure 7 shows an illustrative flow chart of an example operation 700 for generating an initial set of outputs and an initial set of confidences by a pretrained LLM before fine-tuning using a first dataset, according to some implementations. The example operation 700 is described below as being performed by the system 100 in Figure 1 and the arrangement of components in the block diagram 300 in Figure 3 for clarity in describing aspects of the present disclosure. The example operation 700 may be performed in conjunction with example operation 800 in Figure 8, which may be an example implementation of block 612 in Figure 6. As such, the example operation 700 in Figure 7 may be performed in conjunction with the example operation 500 in Figure 5 and the example operation 400 in Figure 4.

With the system 100 having obtained the pretrained LLM 140 at block 502 and having obtained the first dataset at block 504 in Figure 5, at 702, the pretrained LLM 140 (before fine-tuning using the first dataset at block 506 in Figure 5) generates an initial set of outputs based on the pretrained LLM 140 analyzing the first dataset to response to the set of inputs. Block 702 is similar to block 404 and block 412 of the example operation 400 in Figure 4, except the LLM 306 is not yet fine-tuned using the first dataset 304 before generating the initial set of outputs 310. As such, the parameters 308 are the initial parameters set for the pretrained LLM 306 before any fine-tuning.

At 704, the pretrained LLM 140 (before fine-tuning using the first dataset at block 506 in Figure 5) also generates an initial set of confidences for the initial set of outputs. Similar to block 406 and block 414 of the example operation 400 in Figure 4, when each output of the initial set of outputs 310 is being generated, the pretrained LLM 306 also generates a confidence of the initial set of confidences 312 that corresponds to the output generated. As such, each confidence of the initial set of confidences 312 corresponds to an output of the initial set of outputs 310 (706). In this manner, the LLM 306: generates the initial set of outputs 310 and the initial set of confidences 312 using the first dataset 304 but before fine-tuning the LLM 306 using the first dataset 304; generates the first set of outputs 320 and the first set of confidences 322 using the first dataset 304 and after fine-tuning the LLM 306 using the first dataset 304; and generates the second set of outputs 330 and the second set of confidences 332 using the second dataset 313 but before fine-tuning the LLM 306 using the second dataset 313 (thus with the LLM 306 having been last fine-tuned using the first dataset 304). With the different sets of confidences generated by the LLM 306, the difference generator 360 is able to perform the KL divergence test on the distributions of the confidences as described below with reference to Figure 8. As noted herein, performing the KL divergence test may be based on the indication 346 indicating that the K-S test was used to determine that the LLM 306 is to be fine-tuned using the second dataset 313.

Figure 8 shows an illustrative flow chart of an example operation 800 for performing a KL divergence test to determine when to fine-tune an LLM, according to some implementations. The example operation 800 is described below as being performed by the system 100 in Figure 1 and the arrangement of components in the block diagram 300 in Figure 3 for clarity in describing aspects of the present disclosure. The example operation 800 may be performed after the example operation 700 in Figure 7 and the example operation 500 in Figure 5. The example operation 800 in Figure 8 may be an example implementation of block 612 of the example operation 600 in Figure 6 and blocks 420 and 422 of the example operation 400 in Figure 4. As such, the example operation 800 in Figure 8 may be performed in conjunction with the example operations 400 through 700 in Figure 4 through Figure 7.

At 802, the system 100 calculates a first relative entropy from the initial distribution to the second distribution. For example, the difference generator 360 may generate a KL divergence (350) $D_{KL1}$ based on equation (6) above and as defined in equation (7) below:

$$D_{KL1}(P2||P0) = \sum_{x \in X} P2(x) * \log\left(\frac{P2(x)}{P0(x)}\right) \qquad (7)$$

P0 is the initial distribution 314 of the initial set of confidences 312. As such, $D_{KL1}$ measures the relative excess surprise from using the second distribution P2 instead of the initial distribution P0.

At 804, the system 100 calculates a second relative entropy from the initial distribution to the first distribution. For example, the difference generator 360 may generate a KL divergence (350) $D_{KL2}$ based on equation (6) above and as defined in equation (8) below:

$$D_{KL2}(P1||P0) = \sum_{x \in X} P1(x) * \log\left(\frac{P1(x)}{P0(x)}\right) \qquad (8)$$

$D_{KL2}$ measures the relative excess surprise from using the first distribution P1 instead of the initial distribution P0.

At 806, the system 100 generates a divergence metric from the first relative entropy and the second relative entropy. The divergence metric is to indicate a correlation in a first divergence between the second set of confidences 332 and the initial set of confidences 312 (as measured by the relative entropy $D_{KL1}$) and a second divergence between the first set of confidences 322 and the initial set of confidences 312 (as measured by the relative entropy $D_{KL2}$). For example, the divergence metric may be a magnitude of the difference between the first relative entropy and the second relative entropy (i.e., $|D_{KL1} - D_{KL2}|$).

In some implementations, the divergence metric equals the first relative entropy divided by the second relative entropy (808), which is also referred to as a coefficient (such as coefficient 352). For example, a coefficient theta ($\theta$) may be calculated by the difference generator 360 as depicted in equation (9) below:

$$\theta = \frac{D_{KL1}}{D_{KL2}} \qquad\qquad (9)$$

In some other implementations, the coefficient may be the second relative entropy divided by the first relative entropy. Either way, such a divergence metric indicates a ratio between the first relative entropy and the second relative entropy, which is an indirect comparison of the first set of confidences 322 and the second set of confidences 332 by comparing the two sets of confidences 322 and 332 directly to the initial set of confidences 312 and then comparing those two comparisons.

At 810, the system 100 compares the divergence metric generated at block 806 to a divergence threshold. For example, the difference generator 360 may compare the coefficient 352 based on equation (9) above to a KL divergence threshold 354. The threshold may be predefined during programming of the difference generator. In some implementations, the threshold may be user defined or adjustable. For example, the divergence threshold may be originally set to 0.9 and may increase over time based on the LLM 306 fine-tuning too often or may decrease over time based on the LLM 306 becoming unhelpful in responding to user queries.

At decision block 812, if the system 100 determines that the divergence metric is not greater than the divergence threshold, the process ends, and the system 100 does not fine-tune the LLM 306 using the second dataset 313. For example, if the coefficient 352 is not greater than a threshold of 0.9 defined for the KL divergence test at 354, the difference generator 360 does not indicate via the final indication 356 that the fine-tuner 315 is to fine-tune the LLM 306 (even though the K-S test caused the indication 346 to indicate that the LLM 306 is to be fine-tuned using the second dataset 313).

Conceptually, the divergence threshold being 0.9 means that the surprise measured between the second distribution 334 and the initial distribution 314 needs to be at least 90 percent of the surprise measured between the first distribution 324 and the initial distribution 314. To note, the pre-training of the LLM 306 using the first dataset 304 causes the differences in the initial set of confidences 312 and the first set of confidences 322 and thus the surprise measured between the first distribution 324 and the initial distribution 314. As such, the threshold is set to ensure that the surprise measured between the second distribution 334 and the initial distribution 314 is at least greater than a percentage of the surprise measured between the first distribution and the initial distribution (thus indicating that the differences between the initial set of confidences 312 and the second set of confidences 332 approaches the differences between the initial set of confidences 312 and the first set of confidences 332). The differences approaching in measure (e.g., the coefficient approaching 1) estimates that the differences in the second dataset 313 (the new dataset) are significant enough from the first dataset 304 (the previous dataset) such that the LLM 306 is to be fine-tuned using the first dataset 304.

Referring back to decision block 812, if the system 100 determines that the divergence metric is greater than the divergence threshold, the system 100 fine-tunes the fine-tuned LLM using the second dataset (814). In this manner, both the K-S test and the KL divergence test indicate that the LLM 306 is to be fine-tuned using the new dataset, and the system determines that the LLM 306 is to be fine-tuned, thus initiating fine-tuning of the LLM 306 such as described above.

If the LLM 306 is not to be fine-tuned using the second dataset 313, the system 100 may delete the second set of confidences 332 (and the second set of output 330 if stored) as they are not used in future calculation in determining when to fine-tune the LLM 306. Conversely, after the LLM 306 is fine-tuned using the second dataset, the second distribution may be used as the first distribution for the K-S test and the first relative entropy may be used as the second relative entropy for the KL divergence test may be used when a next dataset is obtained. In this manner, comparison of confidences in determining whether to again fine-tune the LLM using a new dataset is based on the last confidences used in determining that the LLM is to be fine-tuned using the previous dataset. Alternatively, the system 100 may continue to use the original first distribution for the K-S test and the original second relative entropy for the KL divergence test for successive determinations as to whether the LLM is to be fine-tuned using newly obtained datasets.

As noted above, a new dataset may be obtained or a dataset may be updated at any time, such as being on-demand, periodically, or sporadically based on a third party. As such, the system 100 may determine whether the LLM 140 is to be fine-tuned at any time that the dataset is updated. As described herein, since the determination includes efficient calculations based on the confidence distributions instead of unwieldly calculations based on the outputs themselves, a computing system is able to determine that an LLM is to be fine-tuned without require massive amounts of time and computing resources. As a result, quicker decisions are made as to when an LLM is to be fine-tuned, and fewer resources and time are required to determine when an LLM is to be fine-tuned. Also as described herein, the system is configured to efficiently reduce the number of times an LLM is unnecessarily fine-tuned, thus conserving time and processing resources and increasing the time that the LLM may remain online for use.

In some implementations, the system 100 receives an indication in the update to the dataset that the changes to the dataset are time-sensitive changes. For example, for a domain-specific dataset on a legal topic, if a previously governing court decision is overturned, changes to remove the decision or otherwise update the database may be time-sensitive. As such, the system 100 may be configured to identify whether the LLM 140 is to be fine-tuned using the updated dataset (and correspondingly fine-tuning the LLM 140 if determined to be needed) as soon as time-sensitive changes are made to the dataset. In addition, as a result of the K-S test and the KL divergence test being used, the determination to fine-tune the LLM also indirectly compares the different datasets on data quality and data volume.

As used herein, a phrase referring to "at least one of" or "one or more of" a list of items refers to any combination of those items, including single members. As an example, "at least one of: a, b, or c" is intended to cover: a, b, c, a-b, a-c, b-c, and a-b-c, and "one or more of: a, b, or c" is intended to cover: a, b, c, a-b, a-c, b-c, and a-b-c. In addition, the term "document" may be used interchangeably with "electronic document" or "computer readable document" based on how used above.

The various illustrative logics, logical blocks, modules, circuits, and algorithm processes described in connection with the implementations disclosed herein may be implemented as electronic hardware, computer software, or combinations of both. The interchangeability of hardware and software has been described generally, in terms of functionality, and illustrated in the various illustrative components, blocks, modules, circuits and processes described above. Whether such functionality is implemented in hardware or software depends upon the particular application and design constraints imposed on the overall system.

The hardware and data processing apparatus used to implement the various illustrative logics, logical blocks, modules and circuits described in connection with the aspects disclosed herein may be implemented or performed with a general purpose single- or multi-chip processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, or any conventional processor, controller, microcontroller, or state machine. A processor also may be implemented as a combination of computing devices such as, for example, a combination of a DSP and a microprocessor, a plurality of microprocessors, one or more microprocessors in conjunction with a DSP core, or any other such configuration. In some implementations, particular processes and methods may be performed by circuitry that is specific to a given function.

In one or more aspects, the functions described may be implemented in hardware, digital electronic circuitry, computer software, firmware, including the structures disclosed in this specification and their structural equivalents thereof, or in any combination thereof. Implementations of the subject matter described in this specification also can be implemented as one or more computer programs, i.e., one or more modules of computer program instructions, encoded on a computer storage media for execution by, or to control the operation of, data processing apparatus. For example, the LLM 140, the difference generator 150, and the fine-tuner 180 may be implemented in software, such as C++ or the Python programming language, and compiled for execution at the system 100.

If implemented in software, the functions may be stored on or transmitted over as one or more instructions or code on a computer readable medium. The processes of a method or algorithm disclosed herein may be implemented in a processor-executable software module which may reside on a computer readable medium. Computer readable media includes both computer storage media and communication media including any medium that can be enabled to transfer a computer program from one place to another. A storage media may be any available media that may be accessed by a computer. By way of example, and not limitation, such computer readable media may include RAM, ROM, EEPROM, CD-ROM or other optical disk storage, magnetic disk storage or other magnetic storage devices, or any other medium that may be used to store desired program code in the form of instructions or data structures and that may be accessed by a computer. Also, any connection can be properly termed a computer readable medium. Thus communication media may include any medium suitable to convey such instructions/code/software, including carrier waves, transmission signals or the like and any connection used to carry such. Communication media may convey instructions between components of a single computer system and/or between plural separate computer systems. Disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer readable media. Additionally, the operations of a method or algorithm may reside as one or any combination or set of codes and instructions on a machine readable medium and computer readable medium, which may be incorporated into a computer program product.

Therefore, from one perspective, there have been described systems and methods for fine-tuning a large language model (LLM). In particular, a system calculates when to again fine-tune an LLM based on a newly obtained dataset. The system identifies whether the LLM's use of the new dataset causes more than a tolerable difference in the outputs to a defined set of inputs. As such, the system uses the LLM to generate a new set of outputs and corresponding set of confidences for the defined set of inputs based on the new dataset, and the system generates a new distribution of the new set of confidences. The system also stores a previous distribution of a previous set of confidences in a previous set of outputs to the defined set of inputs based on a previous dataset, and the system calculates a difference between the new distribution and the previous distribution. Fine-tuning the LLM is based on the difference.

Further examples of feature combinations taught by the present disclosure are set out in the following numbered clauses.

Clause 1. A computer-implemented method for fine-tuning a large language model (LLM), the method comprising: providing a set of inputs to a fine-tuned LLM; generating, by the fine-tuned LLM, a first set of outputs based on the fine-tuned LLM analyzing a first dataset to respond to the set of inputs; generating, by the fine-tuned LLM, a first set of confidences for the first set of outputs, wherein each confidence of the first set of confidences corresponds to an output of the first set of outputs; obtaining a second dataset; generating, by the fine-tuned LLM, a second set of outputs based on the fine-tuned LLM analyzing the second dataset to respond to the set of inputs; generating, by the fine-tuned LLM, a second set of confidences for the second set of outputs, wherein each confidence of the second set of confidences corresponds to an output of the second set of outputs; calculating a difference between a first distribution of the first set of confidences and a second distribution of the second set of confidences; determining whether to fine-tune the fine-tuned LLM using the second dataset, wherein the determination is based on the difference; and fine-tuning the fine-tuned LLM using the second dataset based on the determination.

Clause 2. The method of clause 1, further comprising: obtaining a pretrained LLM; obtaining the first dataset; and fine-tuning the pretrained LLM using the first dataset to generate the fine-tuned LLM.

Clause 3. The method of clause 2, wherein: calculating the difference between the first distribution and the second distribution includes performing a Kolmogorov-Smirnov (K-S) test between the first distribution and the second distribution; and determining whether to fine-tune the fine-tuned LLM using the second dataset includes identifying whether the first distribution and the second distribution are from a same distribution based on the difference.

Clause 4. The method of clause 3, wherein identifying whether the first distribution and the second distribution are from the same distribution includes comparing the difference to a difference threshold based on a hyperparameter alpha defined for the K-S test.

Clause 5. The method of clause 4, wherein the hyperparameter alpha is defined as 0.05.

Clause 6. The method of clause 3, 4 or 5, wherein determining whether to fine-tune the fine-tuned LLM using the second dataset further includes calculating one or more relative entropies based on the first distribution and the second distribution in response to identifying that the first distribution and the second distribution are not from the same distribution, wherein the determination is further based on the one or more relative entropies.

Clause 7. The method of clause 6, further comprising: generating, by the pretrained LLM before fine-tuning using the first dataset, an initial set of outputs based on the pretrained LLM analyzing the first dataset to respond to the set of inputs; and generating, by the pretrained LLM before fine-tuning using the first dataset, an initial set of confidences for the initial set of outputs, wherein each confidence of the initial set of confidences corresponds to an output of the initial set of outputs and the initial set of confidences form an initial distribution.

Clause 8. The method of clause 7, wherein calculating the one or more relative entropies includes: calculating a first relative entropy from the initial distribution to the second distribution; and calculating a second relative entropy from the initial distribution to the first distribution.

Clause 9. The method of clause 8, wherein determining whether to fine-tune the fine-tuned LLM using the second dataset further includes: generating a divergence metric from the first relative entropy and the second relative entropy; and comparing the divergence metric to a divergence threshold, wherein the determination is based on the comparison.

Clause 10. The method of clause 9, wherein the divergence metric equals the first relative entropy divided by the second relative entropy.

Clause 11. A computing system for fine-tuning a large language model (LLM), the system comprising: one or more processors; and a memory storing instructions that, when executed by the one or more processors, causes the system to perform operations including: providing a set of inputs to a fine-tuned LLM; generating, by the fine-tuned LLM, a first set of outputs based on the fine-tuned LLM analyzing a first dataset to respond to the set of inputs; generating, by the fine-tuned LLM, a first set of confidences for the first set of outputs, wherein each confidence of the first set of confidences corresponds to an output of the first set of outputs; obtaining a second dataset; generating, by the fine-tuned LLM, a second set of outputs based on the fine-tuned LLM analyzing the second dataset to respond to the set of inputs; generating, by the fine-tuned LLM, a second set of confidences for the second set of outputs, wherein each confidence of the second set of confidences corresponds to an output of the second set of outputs; calculating a difference between a first distribution of the first set of confidences and a second distribution of the second set of confidences; determining whether to fine-tune the fine-tuned LLM using the second dataset, wherein the determination is based on the difference; and fine-tuning the fine-tuned LLM using the second dataset based on the determination.

Clause 12. The system of clause 11, wherein the operations further comprise: obtaining a pretrained LLM; obtaining the first dataset; and fine-tuning the pretrained LLM using the first dataset to generate the fine-tuned LLM.

Clause 13. The system of clause 12, wherein: calculating the difference between the first distribution and the second distribution includes performing a Kolmogorov-Smirnov (K-S) test between the first distribution and the second distribution; and determining whether to fine-tune the fine-tuned LLM using the second dataset includes identifying whether the first distribution and the second distribution are from a same distribution based on the difference.

Clause 14. The system of clause 13, wherein identifying whether the first distribution and the second distribution are from the same distribution includes comparing the difference to a difference threshold based on a hyperparameter alpha defined for the K-S test.

Clause 15. The system of clause 14, wherein the hyperparameter alpha is defined as 0.05.

Clause 16. The system of clause 13, 14 or 15, wherein determining whether to fine-tune the fine-tuned LLM using the second dataset further includes calculating one or more relative entropies based on the first distribution and the second distribution in response to identifying that the first distribution and the second distribution are not from the same distribution, wherein the determination is further based on the one or more relative entropies.

Clause 17. The system of clause 16, wherein the operations further comprise: generating, by the pretrained LLM before fine-tuning using the first dataset, an initial set of outputs based on the pretrained LLM analyzing the first dataset to respond to the set of inputs; and generating, by the pretrained LLM before fine-tuning using the first dataset, an initial set of confidences for the initial set of outputs, wherein each confidence of the initial set of confidences corresponds to an output of the initial set of outputs and the initial set of confidences form an initial distribution.

Clause 18. The system of clause 17, wherein calculating the one or more relative entropies includes: calculating a first relative entropy from the initial distribution to the second distribution; and calculating a second relative entropy from the initial distribution to the first distribution.

Clause 19. The system of clause 18, wherein determining whether to fine-tune the fine-tuned LLM using the second dataset further includes: generating a divergence metric from the first relative entropy and the second relative entropy; and comparing the divergence metric to a divergence threshold, wherein the determination is based on the comparison.

Clause 20. The system of clause 19, wherein the divergence metric equals the first relative entropy divided by the second relative entropy.

Various modifications to the implementations described in this disclosure may be readily apparent to those skilled in the art, and the generic principles defined herein may be applied to other implementations without departing from the spirit or scope of this disclosure. For example, while a divergence metric is described as a ratio between relative entropies, the divergence metric can be other measurements between the relative entropies. In addition, while alpha is described as being 0.05 for determining the threshold for the K-S test, alpha may be defined as another suitable value. While the figures and description depict an order of operations to be performed in performing aspects of the present disclosure, one or more operations may be performed in any order or concurrently to perform the described aspects of the disclosure. In addition, or to the alternative, a depicted operation may be split into multiple operations, or multiple operations that are depicted may be combined into a single operation. Thus, the claims are not intended to be limited to the implementations shown herein but are to be accorded the widest scope consistent with this disclosure, the principles, and the novel features disclosed herein.

**Claims**

1. A computer-implemented method for fine-tuning a large language model (LLM), the method comprising:

   providing a set of inputs to a fine-tuned LLM;
   generating, by the fine-tuned LLM, a first set of outputs based on the fine-tuned LLM analyzing a first dataset to respond to the set of inputs;
   generating, by the fine-tuned LLM, a first set of confidences for the first set of outputs, wherein each confidence of the first set of confidences corresponds to an output of the first set of outputs;
   obtaining a second dataset;
   generating, by the fine-tuned LLM, a second set of outputs based on the fine-tuned LLM analyzing the second dataset to respond to the set of inputs;
   generating, by the fine-tuned LLM, a second set of confidences for the second set of outputs, wherein each confidence of the second set of confidences corresponds to an output of the second set of outputs;
   calculating a difference between a first distribution of the first set of confidences and a second distribution of the second set of confidences;
   determining whether to fine-tune the fine-tuned LLM using the second dataset, wherein the determination is based on the difference; and
fine-tuning the fine-tuned LLM using the second dataset based on the determination.

2. The method of claim 1, further comprising:

    obtaining a pretrained LLM;
    obtaining the first dataset; and
    fine-tuning the pretrained LLM using the first dataset to generate the fine-tuned LLM.

3. The method of claim 2, wherein:

    calculating the difference between the first distribution and the second distribution includes performing a Kolmogorov-Smirnov (K-S) test between the first distribution and the second distribution; and
    determining whether to fine-tune the fine-tuned LLM using the second dataset includes identifying whether the first distribution and the second distribution are from a same distribution based on the difference.

4. The method of claim 3, wherein identifying whether the first distribution and the second distribution are from the same distribution includes comparing the difference to a difference threshold based on a hyperparameter alpha defined for the K-S test.

5. The method of claim 4, wherein the hyperparameter alpha is defined as 0.05.

6. The method of claim 3, 4 or 5, wherein determining whether to fine-tune the fine-tuned LLM using the second dataset further includes calculating one or more relative entropies based on the first distribution and the second distribution in response to identifying that the first distribution and the second distribution are not from the same distribution, wherein the determination is further based on the one or more relative entropies.

7. The method of claim 6, further comprising:

    generating, by the pretrained LLM before fine-tuning using the first dataset, an initial set of outputs based on the pretrained LLM analyzing the first dataset to respond to the set of inputs; and
    generating, by the pretrained LLM before fine-tuning using the first dataset, an initial set of confidences for the initial set of outputs, wherein each confidence of the initial set of confidences corresponds to an output of the initial set of outputs and the initial set of confidences form an initial distribution.

8. The method of claim 7, wherein calculating the one or more relative entropies includes:

    calculating a first relative entropy from the initial distribution to the second distribution; and
    calculating a second relative entropy from the initial distribution to the first distribution.

9. The method of claim 8, wherein determining whether to fine-tune the fine-tuned LLM using the second dataset further includes:

    generating a divergence metric from the first relative entropy and the second relative entropy; and
    comparing the divergence metric to a divergence threshold, wherein the determination is based on the comparison.

10. The method of claim 9, wherein the divergence metric equals the first relative entropy divided by the second relative entropy.

11. A computing system for fine-tuning a large language model (LLM), the system comprising:

    one or more processors; and
    a memory storing instructions that, when executed by the one or more processors, causes the system to perform operations including:

        providing a set of inputs to a fine-tuned LLM;
        generating, by the fine-tuned LLM, a first set of outputs based on the fine-tuned LLM analyzing a first dataset to respond to the set of inputs;

generating, by the fine-tuned LLM, a first set of confidences for the first set of outputs, wherein each confidence of the first set of confidences corresponds to an output of the first set of outputs;

obtaining a second dataset;

generating, by the fine-tuned LLM, a second set of outputs based on the fine-tuned LLM analyzing the second dataset to respond to the set of inputs;

generating, by the fine-tuned LLM, a second set of confidences for the second set of outputs, wherein each confidence of the second set of confidences corresponds to an output of the second set of outputs;

calculating a difference between a first distribution of the first set of confidences and a second distribution of the second set of confidences;

determining whether to fine-tune the fine-tuned LLM using the second dataset, wherein the determination is based on the difference; and

fine-tuning the fine-tuned LLM using the second dataset based on the determination.

12. The system of claim 11, wherein the operations further comprise functionality corresponding to the method of any of claims 2 to 10.

13. A computer-readable medium comprising instructions that, when executed by one or more processors, cause one or more processors to carry out the method of claim 11 or 12.

*Figure 1*

EP 4 718 313 A1

*Figure 2*

*Figure 3*

**400**

```
┌─────────────────────────────────────────────────────────────────────────┐
│              Provide a set of inputs to a fine-tuned LLM.  402             │
└─────────────────────────────────────────────────────────────────────────┘
                                    │
                                    ▼
┌─────────────────────────────────────────────────────────────────────────┐
│   Generate, by the fine-tuned LLM, a first set of outputs based on the    │
│   fine-tuned LLM analyzing a first dataset to respond to the set of       │
│   inputs.  404                                                            │
└─────────────────────────────────────────────────────────────────────────┘
                                    │
                                    ▼
┌─────────────────────────────────────────────────────────────────────────┐
│  Generate, by the fine-tuned LLM, a first set of confidences for the      │
│  first set of outputs.  406                                               │
│   ┌───────────────────────────────────────────────────────────────────┐  │
│   │ Each confidence of the first set of confidences corresponds to an  │  │
│   │ output of the first set of outputs.  408                           │  │
│   └───────────────────────────────────────────────────────────────────┘  │
└─────────────────────────────────────────────────────────────────────────┘
                                    │
                                    ▼
┌─────────────────────────────────────────────────────────────────────────┐
│                      Obtain a second dataset.  410                        │
└─────────────────────────────────────────────────────────────────────────┘
                                    │
                                    ▼
┌─────────────────────────────────────────────────────────────────────────┐
│  Generate, by the fine-tuned LLM, a second set of outputs based on the    │
│  fine-tuned LLM analyzing the second dataset to respond to the set of     │
│  inputs.  412                                                             │
└─────────────────────────────────────────────────────────────────────────┘
                                    │
                                    ▼
┌─────────────────────────────────────────────────────────────────────────┐
│  Generate, by the fine-tuned LLM, a second set of confidences for the     │
│  second set of outputs.  414                                              │
│   ┌───────────────────────────────────────────────────────────────────┐  │
│   │ Each confidence of the second set of confidences corresponds to an │  │
│   │ output of the second set of outputs.  416                          │  │
│   └───────────────────────────────────────────────────────────────────┘  │
└─────────────────────────────────────────────────────────────────────────┘
                                    │
                                    ▼
┌─────────────────────────────────────────────────────────────────────────┐
│  Calculate a difference between a first distribution of the first set of  │
│  confidences and a second distribution of the second set of              │
│  confidences.  418                                                        │
└─────────────────────────────────────────────────────────────────────────┘
                                    │
                                    ▼
┌─────────────────────────────────────────────────────────────────────────┐
│  Determine whether to fine-tune the fine-tuned LLM using the second       │
│  dataset, with the determination being based on the difference.  420      │
└─────────────────────────────────────────────────────────────────────────┘
                                    │
                                    ▼
┌─────────────────────────────────────────────────────────────────────────┐
│  Fine-tune the fine-tuned LLM using the second dataset based on the       │
│  determination.  422                                                      │
└─────────────────────────────────────────────────────────────────────────┘
```

*Figure 4*

500

| Obtain a pretrained LLM. 502 |

↓

| Obtain the first dataset. 504 |

↓

| Fine-tune the pretrained LLM using the first dataset to generate the fine-tuned LLM. 506 |

## Figure 5

600

| Perform a K-S test between the first distribution and the second distribution to calculate the difference between the first distribution and the second distribution. 602 |

↓

| Identify whether the first distribution and the second distribution are from a same distribution based on the difference. 604 |
| Compare the difference to a difference threshold based on a hyperparameter alpha defined for the K-S test. 606 |
| The hyperparameter alpha is defined as 0.05. 608 |

↓

The first distribution and the second distribution are from the same distribution? 610 — Yes → END

↓ No

| Calculate one or more relative entropies based on the first distribution and the second distribution. 612 |
| The determination is based on the one or more relative entropies. 614 |

## Figure 6

700

Generate, by the pretrained LLM before fine-tuning using the first dataset, an initial set of outputs based on the pretrained LLM analyzing the first dataset to respond to the set of inputs. 702

Generate, by the pretrained LLM before fine-tuning using the first dataset, an initial set of confidences for the initial set of outputs. 704

Each confidence corresponds to an output of the initial set of outputs and the initial set of confidences form an initial distribution. 706

## *Figure 7*

800

Calculate a first relative entropy from the initial distribution to the second distribution. 802

Calculate a second relative entropy from the initial distribution to the first distribution. 804

Generate a divergence metric from the first relative entropy and the second relative entropy. 806

The divergence metric equals the first relative entropy divided by the second relative entropy. 808

Compare the divergence metric to a divergence threshold. 810

Divergence metric greater than divergence threshold? 812 — No → END

Yes

Fine-tune the fine-tuned LLM using the second dataset. 814

## *Figure 8*

## EUROPEAN SEARCH REPORT

Europäisches
Patentamt
European
Patent Office
Office européen
des brevets

**Application Number**

EP 25 19 2533

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/020486 A1 (YANG WENZHUO [SG] ET AL) 18 January 2024 (2024-01-18) * the whole document * ----- | 1-13 | INV. G06F40/30 |
| A | FEI YUAN ET AL: "KS-Lottery: Finding Certified Lottery Tickets for Multilingual Language Models", ARXIV.ORG, CORNELL UNIVERSITY LIBRARY, 201 OLIN LIBRARY CORNELL UNIVERSITY ITHACA, NY 14853, 3 June 2024 (2024-06-03), XP091774905, ----- | 1-13 | |

**TECHNICAL FIELDS SEARCHED (IPC)**

G06F

The present search report has been drawn up for all claims

| Place of search | Date of completion of the search | Examiner |
|---|---|---|
| Berlin | 9 January 2026 | Abram, Robert |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

......................................................................................

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 25 19 2533

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2026

| Patent document cited in search report | Publication date | Patent family member(s) | Publication date |
|---|---|---|---|
| US 2024020486 A1 | 18-01-2024 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 89847224